# EUROPÄISCHE PATENTSCHRIFT

(11) **EP 2 501 241 B1**
(45) Veröffentlichungstag und Bekanntmachung des Hinweises auf die Patenterteilung: **07.05.2014**
(21) Anmeldenummer: 10805392.7
(22) Anmeldetag: 17.11.2010
(51) Int. Cl.: A23B 4/033, A23B 7/022, A23L 3/44, A23L 3/50, A01N 3/00, A23L 1/22, F26B 3/22

(54) **VERFAHREN ZUR KONSERVIERUNG VON NAHRUNGSMITTELN UND VERFAHREN ZUR HERSTELLUNG VON KONSERVIERTEN NAHRUNGSMITTELN**
METHOD FOR PRESERVING FOOD AND METHOD FOR PRODUCING PRESERVED FOOD
PROCÉDÉ DE CONSERVATION D'ALIMENTS ET PROCÉDÉ DE PRODUCTION D'ALIMENTS CONSERVÉES

(30) Priorität: 17.11.2009 DE 102009055809
(43) Veröffentlichungstag der Anmeldung: 26.09.2012
(73) Patentinhaber: Innodrying GmbH, 22393 Hamburg (DE)
(72) Erfinder: WOLFRAM, Jens, 22393 Hamburg (DE)
(74) Vertreter: Herzog, Günter
(86) Internationale Anmeldenummer: PCT/DE2010/001340
(87) Internationale Veröffentlichungsnummer: WO 2011/060762

(56) Entgegenhaltungen:
- EP-A2- 1 016 343
- CH-A5- 673 374
- DE-A1- 4 344 468
- DE-A1-102005 061 288
- DE-B3-102004 040 717
- US-A- 2 420 517
- US-A- 3 239 942
- US-A- 3 340 068
- US-A- 5 227 183
- US-A1- 2009 053 385

## Beschreibung

Die Erfindung geht aus von einem Verfahren zur Konservierung von Nahrungsmitteln wie Früchten, Pflanzen sowie Teilen von diesen, Kleinsttieren sowie tierischem Stückgut, nach dem Oberbegriff des Anspruchs 1 sowie einem Verfahren zur Herstellung von konservierten Nahrungsmitteln nach dem Oberbegriff des Anspruchs 11.

Eine bewährte Methode, organisches Material haltbar zu machen, ist dessen Trocknung, also der Wasserentzug aus dem Stückgut. Während es bei organischem Material aus dem Nonfood-Bereich dabei darauf ankommt, lediglich Farbe und Form des organischen Materials, z. B. von Schnittblumen, zu erhalten, ist bei Nahrungsmitteln darüber hinaus noch für den Erhalt des Geschmacks sowie der anderen ernährungsphysiologisch wichtigen Bestandteile, wie z. B. der Vitamine, Sorge zu tragen.

Zu den für Lebensmittel am häufigsten angewendeten Trocknungsverfahren zählen die Gefriertrocknung, die Wirbelschichttrocknung, die Sprühtrocknung sowie die normale Trocknung in Trocknungsapparaten oder unter alleiniger Nutzung der Sonnenenergie.

Bei der Wirbelschichttrocknung wird das zu trocknende Gut fluidisiert, d. h. in einem Luftwirbelgetrocknet. Der Nachteil dieses Verfahrens besteht darin, dass aufgrund der erforderlichen verhältnismäßig hohen Temperaturen, in der Regel weit über 100°C, Lebensmittel nicht nur ihr natürliches Aussehen, sondern auch ihre Inhaltsstoffe verlieren. Dadurch ist die Anwendung der Wirbelschichttrocknung auf solche Produkte begrenzt, denen die hohen Temperaturen nicht schaden, z. B. Zucker, bzw. deren Aufbereitung ganz und gar höhere Temperaturen erfordern, wie dies bei der Kaffeeröstung der Fall ist.

Die Sprühtrocknung ist nur zur Herstellung pulverförmiger Materialien, wie z. B. von Milchpulver, geeignet.

Abgesehen von der Sonnentrocknung, die ein sehr langwieriges Verfahren und daher ebenfalls nur für wenige Produkte anwendbar ist, besteht das Prinzip bei den anderen auf Wasserentzug durch Wärme basierenden Trocknungsverfahren darin, das Wasser schnellstmöglich zu verdampfen. Dadurch gehen das natürliche Erscheinungsbild sowie bei Lebensmitteln deren sämtliche Inhaltsstoffe verloren.

Das für Lebensmittel schonendste Verfahren, um deren Geschmack, ihr Aussehen und auch ihre ernährungsphysiologisch wichtigen Bestandteile weitgehend zu erhalten, ist die Gefriertrocknung. Bei diesem in der Lebensmittel- und Pharmaindustrie weit verbreiteten Verfahren wird das Wasser aus dem organischen Material durch Sublimation entzogen. Hierzu wird das organische Material erwärmt, so dass das Wasser in Form von Eisdampf aus den Zellwänden austreten kann. Gleichzeitig wird die Umgebung des Materials so unterkühlt, dass das austretende Wasser sofort kristallisiert und sich an den Kühlflächen absetzt. Dieser Prozess ist energetisch sehr aufwändig, da zwei gegensätzliche Prozesse aufeinander treffen, nämlich Erwärmung und Gefrieren. Zudem ist die Trocknungsdauer bei diesem Prozess sehr hoch, z. B. werden für die Trocknung von Früchten je nach Fruchtart und -größe 24 bis 48 Stunden benötigt. Aufgrund der langen Trocknungszeit ist die quantitative Ausbeute des Verfahrens nicht sehr hoch. Darüber hinaus erfordert die Gefriertrocknung eine aufwändige Anlagentechnik. All diese Nachteile machen dieses Verfahren teuer, was sich auch in einem entsprechend hohen Endproduktpreis niederschlägt. Schließlich ist noch als Nachteil zu nennen, dass die Gefriertrocknung für besonders empfindliche Lebensmittel, wie Pilze, nicht geeignet ist.

Schließlich ist ein Verfahren zum Haltbarmachen von einer nicht vorgelatinierten granulierten Stärke oder einem nicht vorgelatinierten granulierten Mehl bekannt, bei dem die Stärke oder das Mehl dehydriert wird bis die Stärke bzw. das Mehl wasserfrei oder nahezu wasserfrei ist. Anschließend wird die dehydrierte Stärke bzw. das dehydrierte Mehl bei Temperaturen von 100°C oder darüber getrocknet. Bei der nicht-thermischen Dehydrierung wird ein hydrophiles Lösungsmittel, z. B. Alkohol, verwendet. Die anschließende Trocknung kann in einem Wirbelschichtreaktor erfolgen und dauert 1 bis 20 Stunden, je nach gewünschtem Inhibitionsgrad (US 5,932,017 A). Der Nachteil dieses Verfahren besteht darin, dass es lediglich für Stärke und Mehl anwendbar ist, nicht für die Produkte selbst, aus denen die Stärke bzw. das Mehl gewonnen wird. Außerdem würden sich bei den hohen Trocknungstemperaturen die Produkte sowohl von ihrem Aussehen als auch von den Inhaltsstoffen her, wie oben bereits erwähnt, nachteilig verändern.

Bekannt ist auch ein Verfahren zur Trockenpulvergewinnung aus frischen pflanzlichen Rohstoffen, bei dem in einem ersten Verfahrensschritt der Rohstoff schonend zerkleinert, ggf. blanchiert und teilweise entfeuchtet wird. Anschließend wird der Rohstoff mit einer Trocknungsflüssigkeit, z. B. Alkohol oder Keton gewaschen bzw. vermischt. Nach dem Trennen der festen und flüssigen Phase erfolgt die Trocknung der festen Phase bei Temperaturen unterhalb 100° C. Die Flüssigkeit wird aus beiden Phasen zurück gewonnen DE 43 44 468 A1).

Bei einem Verfahren zum Trocknen von gefrorenen Lebensmitteln, insbesondere von Möhren, werden die gefrorenen Möhrenpartikel in einem Wirbelbett bei einem Druck von 1,33x10-3 bar und einer Temperatur von ca. 40 °C ohne Verwendung eines Lösungsmittels getrocknet. Das Trocknungsgut wird bei einer Restfeuchte von unter 7% aus dem Wirbelbett entnommen (US 3,239,942 A).

Schließlich ist ein alternatives Konservierungsverfahren für Fruchtsäfte, Pulver und Trester, insbesondere ein Niedrig-Temperaturverfahren für Schwarze Johannisbeer-Trester, bekannt. Der Fruchttrester wird mit Alkohol gemischt, der Alkohol verdampft und wird zur Wiederverwendung zurückgewonnen. Die Trocknungsstufe für die Fruchttrester weist einen Wirbelbetttrockner auf. Eine Behandlung mit Alkohol und Wasserdampf schließt sich an, wobei hier Temperaturen oberhalb 100 °C vorherrschen (US 2009/0053385 A1).

### Die Erfindung und ihre Vorteile

Das erfindungsgemäße Verfahren mit den Merkmalen des Hauptanspruchs sowie des Anspruchs 11 hat den Vorteil, dass es mit deutlich geringeren Trocknungstemperaturen auskommt und wesentlich kürzere Trocknungszeiten erfordert als die Gefriertrocknung. Vergleichbare Mengen, die mit Gefriertrocknung 24 bis 48 Stunden benötigen, lassen sich durch das erfindungsgemäße Verfahren in 30 bis 90 Minuten trocknen. Somit sind auch höhere Durchsätze erzielbar.

Durch die kürzeren Trocknungszeiten und dadurch, dass keine energetisch gegenläufigen Prozesse in ein und demselben Reaktor ablaufen, weist das Verfahren auch eine deutlich bessere Energieeffizienz als die Gefriertrocknung auf und ist somit umweltschonender als alle bisher bekannten Verfahren, von der Sonnentrocknung einmal abgesehen. Die teure Kühllogistik, wie sie die Gefriertrocknung erfordert, wird für das erfindungsgemäße Verfahren nicht benötigt. Lediglich zur Rückgewinnung des Lösungsmittels wird Kälte benötigt, was jedoch durch an sich bekannte sog. Kältefallen auf einfache Weise und ohne aufwändige Kühltechnik realisierbar ist.

Der dritte wesentliche Vorteil, der durch den schonenden Trocknungsvorgang erzielt wird, besteht in der nahezu unbegrenzten Anwendung des Konservierungsverfahrens. So können empfindliche Pflanzen, z. B. Kräuter, Pilze, ebenso wie weiche Früchte, z. B Beerenobst, so getrocknet werden, dass sie ihre ursprüngliche Gestalt, Farbe und auch ihre Inhaltsstoffe weitgehend behalten, und das, obwohl die Produkte nach dem Trocknen 92 bis 99% ihres Flüssigkeitsanteils verloren haben. Das wird dadurch erreicht, dass durch Anwesenheit des dehydrierenden und gleichzeitig auch anreichernden Lösungsmittels während des Trocknungsprozesses in der Wirbelschicht die Zellstrukturen des Nahrungsmittels erhalten bleiben. Die durch die Dehydrierung dem Nahrungsmittel verlorengehenden Inhaltsstoffe werden den nahezu wasserfreien Zellen desselben Nahrungsmittels über das Lösungsmittel wieder zugeführt. So ist z. B. die Trocknung ganzer Erdbeerfrüchte möglich, was im Gefriertrocknungsverfahren aus wirtschaftlichen Gesichtspunkten nicht sinnvoll ist, da jede Vergrößerung des Durchmessers der zu trocknenden Frucht um 0,5 cm bei der Verlängerung der Trocknungszeit quadratisch eingeht. Die Endprodukte sind darüber hinaus durch weitgehende Eliminierung von Schädlingen, wie z. B. Pilzen, Bakterien u. a., keimreduziert.

Nach einer vorteilhaften Ausgestaltung der Erfindung wird das Nahrungsmittel vor dem Einbringen in den Trocknungsapparat mit dem Lösungsmittel in Kontakt gebracht. Dadurch erfolgt bereits vor dem Trocknungsprozess die Dehydrierung, bei der die wasserlöslichen Inhaltsstoffe des Nahrungsmittels in das Lösungsmittel gelangen und in einer diesbezüglich vorteilhaften Ausgestaltung der Erfindung durch dieses Lösungsmittel dem Nahrungsmittel während der Anreichungsphase des Trocknungsprozesses wieder zugeführt werden können. Durch die Einlagerung in ein Lösungsmittel kann das Nahrungsmittel über einen längeren Zeitraum gelagert werden, ohne dass es verdirbt bzw. seine Inhaltsstoffe verloren gehen. Die abschließende Konservierung durch Trocknung wird dann je nach Kapazität der Trocknungsanlage bzw. Bedarf an dem jeweiligen Produkt vorgenommen, wobei ihm seine Inhaltsstoffe während des Trocknungsprozesses über das Lösungsmittel, in dem es eingelagert war, wieder zugeführt werden.

Die Verwendung jenes Lösungsmittel zur Anreicherung des Nahrungsmittels, das zuvor mit demselben zu trocknenden Nahrungsmittel in Kontakt war und ihm seine Inhaltsstoffe entzogen hat, hat den Vorteil, dass das Nahrungsmittel den größten Teil seiner ursprünglichen Inhaltsstoffe zurück erhält, was nicht zuletzt aus ernährungspsychologischer Sicht von besonderer Bedeutung ist.

Nach einer vorteilhaften Ausgestaltung der Erfindung wird das Nahrungsmittel in einer Wirbelschicht getrocknet. Im fluidisierten Zustand ist ein idealer Wärme- und Stoffübergang möglich, so dass sich die Trocknungszeit des Nahrungsmittels weiter verringert.

Nach einer diesbezüglich vorteilhaften Ausgestaltung der Erfindung erfolgt die Trocknung des Nahrungsmittels in der Wirbelschicht unter Vakuum, wodurch die Prozesse des Wärme- und Stoffübergangs wesentlich beschleunigt werden.

Nach einer diesbezüglich anderweitigen Ausgestaltung der Erfindung erfolgt die Trocknung des Nahrungsmittels in der Wirbelschicht unter Normaldruck als konvektive Trocknung.

Nach einer anderweitigen vorteilhaften Ausgestaltung der Erfindung wird das Lösungsmittel aus dem Abluftstrom des Trocknungsapparates zurückgewonnen. Das zurückgewonnene Lösungsmittel kann zur Vorbehandlung des Nahrungsmittels mit Lösungsmittel, wie sie im nachfolgenden Absatz erläutert ist, verwendet oder während des Trocknungsprozesses in der Anreicherungsphase dem Nahrungsmittel wieder zugeführt werden. Durch die Kreislaufführung des Lösungsmittels gewinnt das Konservierungsverfahren wesentlich an Wirtschaftlichkeit.

Nach einer besonders vorteilhaften Ausgestaltung der Erfindung wird das Lösungsmittel nach einer Vortrocknung des Nahrungsmittels auf dieses aufgebracht. Dadurch können die mit dem Lösungsmittel transportierten Inhaltsstoffe sofort von dessen Zellen aufgenommen werden und das nunmehr entladene Lösungsmittel kann den Trocknungsapparat mit der Abluft verlassen.

Dieser Vorteil wird noch dadurch verstärkt, wenn das Lösungsmittel vor dem Aufbringen auf das Nahrungsmittel vorgewärmt wird.

Eine andere Möglichkeit, das zu trocknende Nahrungsmittel vor dem Trocknen eine gewisse Zeit zu konservieren besteht darin, es einzufrieren, z. B. durch Schockgefrieren. Das ist besonders bei jenen Lebensmitteln erforderlich, die bis zur Trocknungsanlage einen längeren Weg zurücklegen müssen bzw. wie dies bei Meeresfrüchten und -tieren der Fall ist, nach dem Fang über längere Zeit auf dem Schiff verbleiben müssen.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel der Erfindung ist in der Zeichnung dargestellt und im Folgenden näher beschrieben. In der Zeichnung zeigen:
- Fig. 1: das Fließschema einer Variante des erfindungsgemäßen Verfahrens mit vorbehandelten Nahrungsmitteln unter Vakuum oder als Stickstoff-Prozess und
- Fig. 2: das Fließschema für die Variante ohne Vorbehandlung des Nahrungsmittels ebenfalls unter Vakuum oder als Stickstoff Prozess.

### Beschreibung des Ausführungsbeispiels

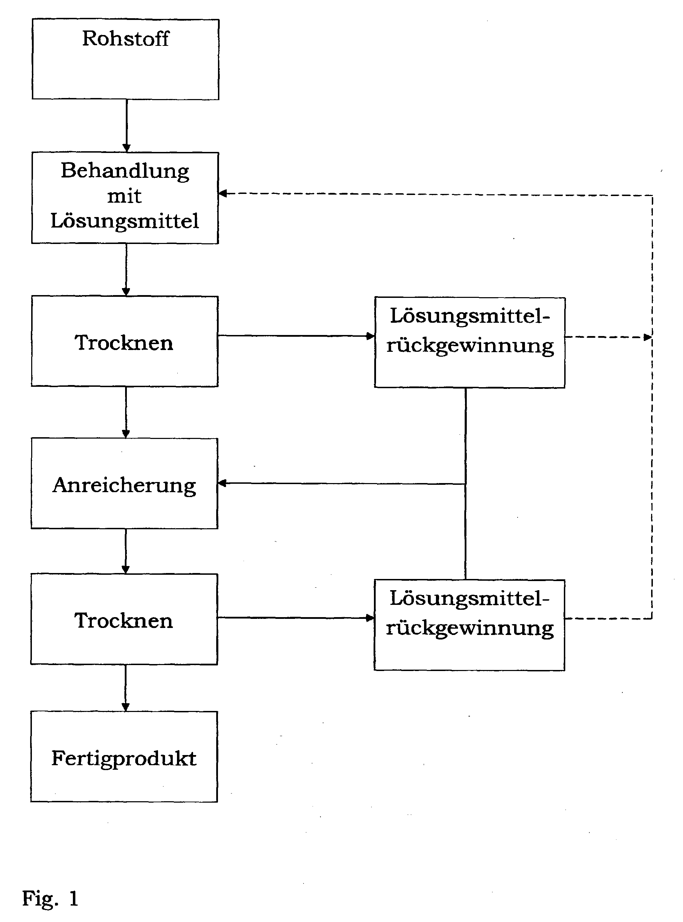

Gemäß des Fließschemas aus Fig. 1 wird das Nahrungsmittel als frischer Rohstoff bereitgestellt, gewaschen und falls erforderlich auf die gewünschte Stückgutgröße zerkleinert. In dem zweiten Schritt wird es mit einem Lösungsmittel in Kontakt gebracht, dessen Dichte geringer ist als die von Wasser. Je nach Einwirkzeit wird dem Rohstoff durch das Lösungsmittel ein Teil oder die gesamte Feuchtigkeit entzogen. Anschließend wird das Lösungsmittel vom Nahrungsmittel getrennt und das Nahrungsmittel in einem Wirbelschichtapparat getrocknet. Zunächst erfolgt eine Vortrocknung, bei der das Lösungsmittel verdampft und mit der Abluft den Trocknungsapparat verlässt. Anschließend werden die dem Trocknungsgut durch das Lösungsmittel zuvor entzogenen Inhaltsstoffe wieder in das Trocknungsgut zugeführt, indem das Trocknungsgutgut während des Trocknungsprozesses mit dem mit diesen Inhaltsstoffen angereicherten Lösungsmittel besprüht wird. Aus dem Abluftstrom des Trocknungsprozesses wird das überschüssige Lösungsmittel zurückgewonnen und wiederverwendet, so dass es dem Nahrungsmittel vor dem und/oder während des Trocknungsprozesses wieder zugeführt werden kann. Der Trocknungsprozess kann sowohl im Vakuum als auch unter einer Schutzgasatmosphäre, beispielsweise unter Verwendung von Stickstoff, ablaufen.

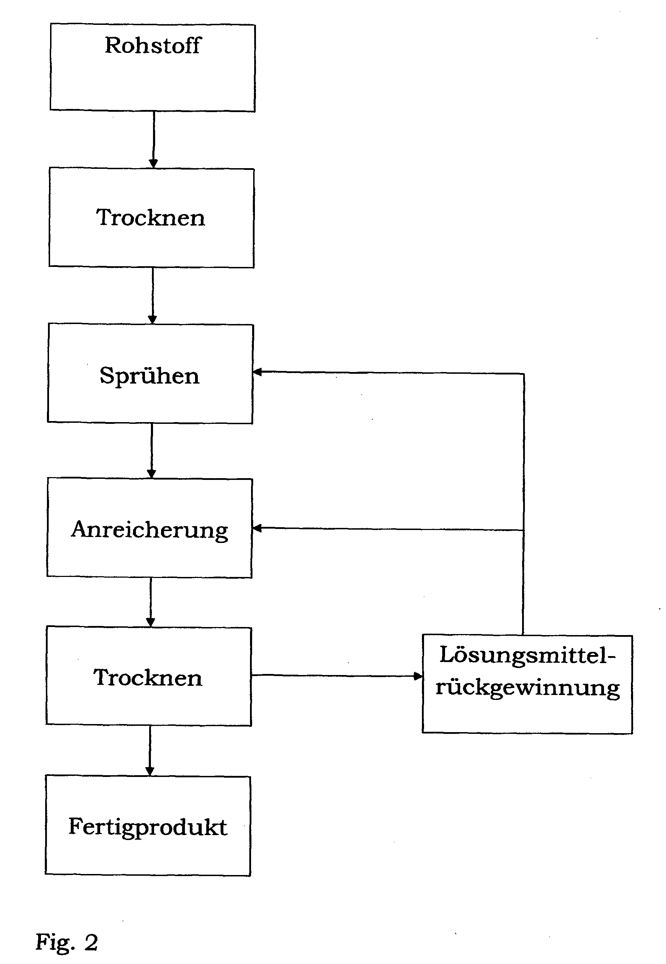

Das in Fig. 2 dargestellte Fließschema unterscheidet sich von dem aus Fig. 1 lediglich dadurch, dass die Behandlung des Nahrungsmittels mit Lösungsmittel vor dem Trocknungsprozess entfällt, der Rohstoff somit mit seinem ursprünglichen Feuchtegehalt in den Trocknungsapparat eingebracht wird und der Wasserentzug ausschließlich in dem Trocknungsapparat erfolgt. Auch hier erfolgt zunächst eine Vortrocknung. Das danach eingesprühte Lösungsmittel unterstützt den thermischen Wasserentzug, indem es schnell in die Zellen eindringt und beim Austritt gebundenes Wasser mitnimmt. Bei diesem in einem sehr kurzen Zeitintervall ablaufenden Vorgang verbleiben ca. 70% der Inhaltsstoffe in dem Nahrungsmittel. Das wird zwar auch bei der Gefriertrocknung erreicht, jedoch erfordert diese hierzu, wie bereits erwähnt, ein Vielfaches an Zeit und Energie. Das erfindungsgemäße Verfahren erlaubt es aber zudem, die bis dahin durch den Trocknungsprozess verloren gegangenen 30% der Inhaltsstoffe während des Trocknungsprozesses dem Produkt dadurch zurückzugeben, dass das Trocknungsgut in einem nächsten Schritt kurzzeitig mit einem mit den Inhaltsstoffen angereicherten Lösungsmittel besprüht wird. Nach diesem sog. Anreicherungsprozess wird das Nahrungsmittel in einer letzten Trocknungsstufe fertiggetrocknet, wobei auch hierbei das Lösungsmittel wieder zurück gewonnen wird.

Nachfolgend soll das erfindungsgemäße Verfahren anhand der Trocknung eines konkreten Produkts näher erläutert werden:

50 kg Petersilie werden kleingehackt und in Alkohol eingelegt. Nach einer Einwirkzeit von 24 Stunden wird das verbliebene Lösungsmittel, das nunmehr sowohl mit dem Farbstoff als auch den anderen wasserlöslichen Inhaltsstoffen angereichert ist, abgetrennt. Die zerkleinerte Petersilie wird in einen Vakuum-Wirbelschichtreaktor gefüllt und mit einer Luftmenge von 4.000 m³/h vorgetrocknet. Die Eintrittstemperatur der Luft in den Wirbelschichtreaktor beträgt 70°C, ihre Austrittstemperatur 12 bis 30°C. Der Vakuumdruck beträgt 220 mbar. Der in dem Abluftstrom enthaltene Alkohol wird über eine Kältefalle in flüssiger Form wieder zurück gewonnen. Nach einer Vortrockenzeit von 30 min schließt sich der Anreicherungsprozess der Petersilie mit den zuvor durch den Alkohol entzogenen Farb- und Aromastoffen an. Hierzu wird auf die sich weiterhin im fluidisierten Zustand befindliche zerkleinerte Petersilie angereicherter Alkohol mit einem Sprühdruck von 20 bar aufgesprüht, und zwar der aus dem anfänglichen Einlegeprozess der Petersilie gewonnene Alkohol. Unter Beibehaltung des Vakuumdrucks von 220 mbar wird die Luftmenge auf 3.000 m³/h reduziert. Die Sprühdauer beträgt 25 min. Danach schließt sich ein 30 minütiger abschließender Trocknungsvorgang unter Beibehaltung der Parameter aus dem Vortrocknungsvorgang an. Das den Wirbelschichtreaktor verlassende Fertigprodukt hat jetzt noch einen Restfeuchtegehalt von 4%.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Verfahren zur Konservierung von Nahrungsmitteln, beispielsweise Früchten, Pflanzen, Teilen von diesen sowie tierischem Stückgut, unter Verwendung eines dehydrierenden Lösungsmittels und durch Trocknung in einem Trocknungsapparat, wobei das Nahrungsmittel in dem Trocknungsapparat in Anwesenheit des Lösungsmittels bei Temperaturen unterhalb 100°C getrocknet und dem im Trocknungsapparat befindlichen Nahrungsmittel ein angereichertes Lösungsmittel zugeführt wird,
**dadurch gekennzeichnet,**
**dass** als Lösungsmittel ein mit den dem Nahrungsmittel zuvor entzogenen Inhaltsstoffen angereichertes Lösungsmittel demselben Nahrungsmittel wieder zugeführt wird.

2. Verfahren nach Anspruch 1,
**dadurch gekennzeichnet,**
**dass** das Nahrungsmittel vor dem Einbringen in den Trocknungsapparat mit dem Lösungsmittel in Kontakt gebracht wird.

3. Verfahren nach Anspruch 1 oder 2,
**dadurch gekennzeichnet,**
**dass** als angereichertes Lösungsmittel jenes Lösungsmittel verwendet wird, das vor dem Trocknungsprozess mit dem zu trocknenden Nahrungsmittel in Kontakt war.

4. Verfahren nach einem der Ansprüche 1 bis 3,
**dadurch gekennzeichnet,**
**dass** das Nahrungsmittel in einer Wirbelschicht getrocknet wird.

5. Verfahren nach Anspruch 4,
**dadurch gekennzeichnet,**
**dass** die Trocknung des Nahrungsmittels in einer Wirbelschicht unter Vakuum erfolgt.

6. Verfahren nach Anspruch 4,
**dadurch gekennzeichnet,**
**dass** die Trocknung des Nahrungsmittels in der Wirbelschicht unter Normaldruck erfolgt.

7. Verfahren nach einem der Ansprüche 1 bis 6,
**dadurch gekennzeichnet,**
**dass** das Lösungsmittel aus dem Abluftstrom des Trocknungsapparates zurückgewonnen wird.

8. Verfahren nach Anspruch 7,
**dadurch gekennzeichnet,**
**dass** das zurückgewonnene Lösungsmittel dem sich im Trocknungsapparat befindlichen Nahrungsmittel wieder zugeführt wird.

9. Verfahren nach einem der Ansprüche 1 bis 8,
**dadurch gekennzeichnet,**
**dass** das Lösungsmittel nach einer Vortrocknung des Nahrungsmittels auf dieses aufgebracht wird.

10. Verfahren nach einem der Ansprüche 1 bis 9,
**dadurch gekennzeichnet,**
**dass** das Lösungsmittel vor dem Aufbringen auf das Nahrungsmittel vorgewärmt wird.

11. Verfahren zur Herstellung von konservierten Nahrungsmitteln, beispielsweise von konservierten Früchten, Pflanzen, Teilen von diesen oder tierischen Stückgut, unter Verwendung eines dehydrierenden Lösungsmittels und Trocknung in einem Trocknungsapparat, wobei das Nahrungsmittel in dem Trocknungsapparat in Anwesenheit des Lösungsmittels bei Temperaturen unterhalb 100°C getrocknet und dem im Trocknungsapparat befindlichen Nahrungsmittel ein angereichertes Lösungsmittel zugeführt wird,
**dadurch gekennzeichnet,**
**dass** als Lösungsmittel ein mit den dem Nahrungsmittel zuvor entzogenen Inhaltsstoffen angereichertes Lösungsmittel demselben Nahrungsmittel wieder zugeführt wird.

## Claims

1. Method of preserving foodstuffs such as fruits, plants, parts thereof, as well as animal piece goods using a dehydrating solvent and by drying in a drying device, whereby the foodstuffs are dried in the presence of a solvent at temperatures below 100°C and that an enriched solvent is added to the foodstuffs in the drying device,
**characterised in that**
as a solvent, an enriched solvent which was previously removed from the foodstuffs is again returned to the same.

2. Method according to claim 1,
**characterized in that**
the foodstuff is brought into contact with the solvent before entering the drying device.

3. Method according to claims 1 or 2,
**characterized in that**
the solvent used as the enriched solvent is that solvent that was in contact with the foodstuff to be dried before the drying process.

4. Method according to claims 1 to 3
**characterized in that**
the foodstuff is dried in a fluidised bed.

5. Method according to claim 4,
**characterized in that**
the drying of the foodstuff is carried out in a fluidised bed in a vacuum.

6. Method according to claim 4,
**characterized in that**
the drying of the foodstuff in the fluidised bed is carried out at normal pressure.

7. Method according to claims 1 to 6,
**characterized in that**
the solvent is recovered from the exhaust flow of the drying device.

8. Method according to claim 7,
**characterized in that**
the recovered solvent is returned again to the foodstuff in the drying device.

9. Method according to claims 1 to 8.
**characterized in that**
the solvent is brought into contact with the foodstuff after pre-drying.

10. Method according to claims 1 to 9,
**characterized in that**
the solvent is pre-heated before being brought into contact with the foodstuff.

11. Method of manufacturing of preserving foodstuffs such as fruits, plants, parts thereof, as well as animal piece goods using a dehydrating solvent and by drying in a drying device whereby the foodstuffs are dried in the presence of a solvent at temperatures below 100°C and that an enriched solvent is added to the foodstuffs in the drying device,
**characterized in that**
as a solvent, an enriched solvent which was previously removed from the foodstuffs is again returned to the same.

## Revendications

1. Procédé pour la conservation de denrées alimentaires, notamment de fruits, de végétaux, de parties de ces derniers ainsi que de matières animales, utilisant un solvant déshydratant ainsi qu'un séchage dans un appareil de séchage, la denrée alimentaire étant séchée dans l'appareil de séchage en présence du solvant à des températures inférieures à 100°C et un solvant enrichi étant acheminé dans la denrée alimentaire se trouvant dans l'appareil de séchage,
**caractérisé par le fait**
**qu'**un solvant enrichi en ingrédients préalablement extraits de la denrée alimentaire est réacheminé, en tant que solvant, dans la même denrée alimentaire.

2. Procédé conformément à la revendication n° 1,
**caractérisé par le fait que**
la denrée alimentaire est mise en contact avec le solvant avant d'être introduite dans l'appareil de séchage.

3. Procédé conformément à la revendication n° 1 ou n°2, **caractérisé par le fait que**
ce solvant qui était en contact avec la denrée alimentaire à sécher avant le processus de séchage, est utilisé comme solvant enrichi.

4. Procédé conformément à l'une des revendications n°1 à n°3, **caractérisé par le fait que**
la denrée alimentaire est séchée dans une couche tourbillonnaire.

5. Procédé conformément à la revendication n°4,
**caractérisé par le fait que**
le séchage de la denrée alimentaire dans une couche tourbillonnaire est effectué sous vide.

6. Procédé conformément à la revendication n°4,
**caractérisé par le fait que**
le séchage de la denrée alimentaire dans la couche tourbillonnaire est effectué sous pression normale.

7. Procédé conformément à l'une des revendications n°1 à n°6, **caractérisé par le fait que**
le solvant est récupéré du courant d'air d'évacuation de l'appareil de séchage.

8. Procédé conformément à la revendication n°7,
**caractérisé par le fait que**
le solvant récupéré est réacheminé dans la dentée alimentaire se trouvant dans l'appareil de séchage.

9. Procédé conformément à l'une des revendications n°1 à n°8, **caractérisé par le fait que**
le solvant est déposé sur la denrée alimentaire après un préséchage de celle-ci.

10. Procédé conformément à l'une des revendications n°1 à n°9, **caractérisé par le fait que**
le solvant est préchauffé avant d'être déposé sur la denrée alimentaire.

11. Procédé pour la production de denrées alimentaires conservées, notamment de fruits, de végétaux, de parties de ces derniers ou de matières animales, conservés, utilisant un solvant déshydratant et un séchage dans un appareil de séchage, la denrée alimentaire étant séchée dans l'appareil de séchage en présence du solvant à des températures inférieures à 100°C et un solvant enrichi étant acheminé dans la denrée alimentaire se trouvant dans l'appareil de séchage,
**caractérisé par le fait**
**qu'**un solvant enrichi en ingrédients préalablement extraits de la denrée alimentaire est réacheminé, en tant que solvant, dans la même denrée alimentaire.
